# EUROPEAN PATENT APPLICATION

(11) **EP 0 658 020 A1**
(43) Date of publication of application: **14.06.1995**
(21) Application number: 93500133.9
(22) Date of filing: 07.12.1993
(51) Int. Cl.: H04L 9/00, E05B 49/00

(54) **A high security remote controlled actuating system**

(71) Applicant: A.J. FONSECA, LDA, 4100 Oporto (PT)
(72) Inventor: Da Fonseca, Antonio Jose, P-4100 Oporto (PT)
(74) Representative: Alonso Langle, Emilio

(57) **Abstract**

The present invention refers to a high security remote actuating intelligent system consisting of control or telecommand units and a decoder unit for bidirectional transmisions which has digital identifiers for each telecommand which are installated during manufacturing process, allowing dymanic encoding of information transmitted between transmitters and the receiver, furthermore it detects and point up the presence of active telecommands whose identifier doesn't belong to the telecommands authorized by the manufacturer of the system. Message encoding is made in such a way that the composition of the digital raster sent between the telecommand and the decoding unit, presents a random variation from one transmission to the following one, thus preventing any attempt of message reconstuction from successive sampling.

## Description

### PURPOSE OF THE INVENTION

This invention refers to a high security remote actuating encoded system through a combination of the dynamic encoding of the information transmitted and the intelligent programming of the number and identification of the telecommands encompassing the same, differentiating those normally automatically recognized from the extraordinary one which can be learnt, and externally noting the presence of these latter when detected by the decoder.

The system is characterized, on the one hand, by the high degree of security derived from the encoding or dynamic encryption of the information transmitted between the different transmitters or telecommands and the receiver and, on the other hand, by the training method or the programming of the number and identification of the different transmitters or telecommands ascribed to the system.

This feature prevents the infringement of the security implicit to the system, by the introduction of "hidden" commands without the prior knowledge of the system's user, both during the programming stage and afterwards, by third parties related to the user who should access the system, for instance, maintenance services or third parties external to the system.

The only thing which is necessary is that, during the manufacturing process, a predetermined set of telecommand identifiers, which can be automatically recognized and their access authorized by the system, is recorded on non volatile memory, thus allowing the learning or programming of each telecommand included in such set.

This allows, in turn, to learn and use a certain number of extra commands which do not belong to the set previously defined at the plant, externally indicating their presented provided that the system is activated or not through the prior intermediary of any of the previous telecommands.

Its immediate use, regardless of other similar or more interesting uses, would be their applicability to other remote control activities in security systems, specifically alarms for mobile or fixed equipments, access control systems, military communications and others

### BACKGROUND OF THE INVENTION

The information encoding or dynamic encryption methods using algorithms of different levels of complexity, such as IBM "Data Encryption System" (DES) using 64 bits and which are a hybrid of the securing method by transposition of the message characters and their replacement by other random characters and of the also well known RSA (Rivest, Shamir and Adleman) method which uses the factoring of numbers composed by big prime factors.

The use of remote actuating systems by means of telecommands in high security alarms does not represent an innovation. For instance, patents P8603573 "Alarm central unit", E88401958 "Data acquisition and processing equipment for the control of motor vehicles", E88300260 "Information and control handling systems", E91400315 "Telecommand systems for door opening and closing in motor vehicles", P8903483 "New device for bolt locking / unlocking", P8802994 "Device for the remote warning of the activation of the alarm system of a motor vehicle", P0553589 " Security installation locking and unlocking system", E87306638 "Electronic alarm device", E88304642 "Identification system programmer", E88201783 "Communication system between one or several central units and several terminals", and the utility model U8703797 "Enhanced remote control".

These systems incorporate a real time dynamic encoding of messages exchanged between the different telecommands and the receiving system, for the purpose of delaying and restraining the decoding of the information transmitted and, especially, its repetition by means of external systems which perform the cryptanalysis through a sampling of the signals transmitted, for instance, patents E89102762 "Procedure for digital and/or analogical encoding of information", E89304575 "Reproduction of security codes", E9011713 "Radiotelemetry monitoring system", E90901995 "Device and method for the use of encoded information" and P0500080 "Enhancement of alarm settings in secret locking devices".

These dynamic methods guarantee that the useful information transmitted remains constant in time because the encoding method of a transmission is different than that of the previous one, through the modification of the signal transmitted between the telecommands and the receiving unit, for instance in the case of patent E9101141 "System, devices and algorithms for error correction in digital transmissions".

Usually, the functions used for message encoding and predefined between the telecommand and the decoding unit. Within this dynamic method there is a procedure for time variation of encoding functions, either totally modifying them or simply altering one or some of their parameters or coefficients.

On the other hand, some of the already existing systems include a training or programming method for the different telecommands which can be recognized by the remote actuating system although they can be considered insufficient as far as the general security of the system is concerned, since they do not detect, in any of both processes, the use of hidden telecommands, i.e. commands that the end user does not know.

These systems, which include training methods, allow the entering or programming of any valid telecommand, irrespective of its identification code.

For instance, this prevents that, in the case of a user who normally uses two telecommands on his remote actuating system of his vehicle alarm, during the training or programming of the system - i.e. during the installation of the alarm system or due to a subsequent sabotage - a third hidden command, which is perfectly valid for the decoding system and which enables third parties to subsequently access such alarm system, is introduced without his prior knowledge.

### DESCRIPTION OF THE INVENTION

The high security remote actuating intelligent system is formed by actuating modules - called telecommands - and by one unit which decodes the information transmitted by the different telecommands and which is called decoder.

Normally, this system is incorporated into broader systems, for instance motor vehicles alarms.

During the training or programming process of the system, this method prevents third parties to enter into the system, without the prior knowledge of the end user, telecommands which might be used as real "Trojan horses".

This method enables to previously ascribe to each decoder - during the manufacturing process - a set of identification codes authorized for the specific commands which will be used in the future by the authorized individual.

During the training process, the system will only accept those telecommands the identification of which forms parts of the set.

Notwithstanding the above and with a view to prevent that the system gets useless due to the loss of all the authorized telecommands, a predefined number of ancillary telecommands and the identification code of which is not referenced in the set can be additionally learnt.

Every time that the system may present the possibility of learning, or be programmed by, one or more of these ancillary telecommands, the decoding unit will report its presence through an output line.

This procedure is validated during any operation performed by the unit and until the execution of a new learning or programming process through which this or these telecommands are withdrawn.

Through the method claimed, the entering of hidden telecommands in the system becomes impossible since the so-called authorized telecommands can only be supply by the manufacturer to the user, subject to a previous order.

The warning telecommands which might have been installed at any moment through a special training or programming procedure are immediately detected and reported, thus informing the user of its presence within the system, since such presence could eventually infringe the security system. Such warning signalling system cannot be avoided, thus guaranteeing the forwarding of the information to the user.

Within the claimed system, message encoding is made in such a way that the composition of the digital raster sent between the telecommand and the decoding unit presents a random variation from one transmission to the following one, thus preventing any attempt of message reconstruction from successive sampling, especially through encoding functions recognition.

The safety of message encryption is far better than in the case of already existing systems, due to the random appearance introduced in the composition of the raster sent on each transmission.

### DESCRIPTION OF DRAWINGS

To complement this description, and with the purpose of contributing to a better comprehension of the features of the proposed invention, this report includes, as an integral part of it, with an illustrative and not limitative purpose, a single page of drawings, where the referenced system is represented.

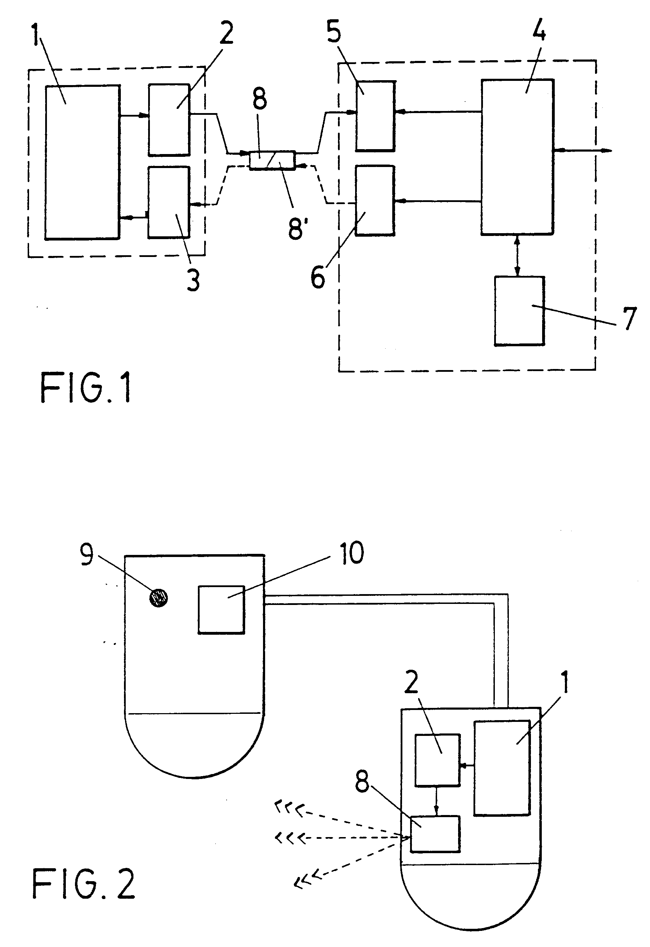

Figure 1 shows the complete functional diagram of the bidirectional remote actuation intelligent system, with one of the telecommands and the decoder, incorporating the microcontrollers, signal emitters, signal modulator, demodulators and non volatile memory.

Figure 2 shows a diagram representing a simple variation of this system, which is single-directional, of an alarm telecommand for motor vehicles with the microcontroller, modulator, antenna and switch along with the external optical multi-indicator.

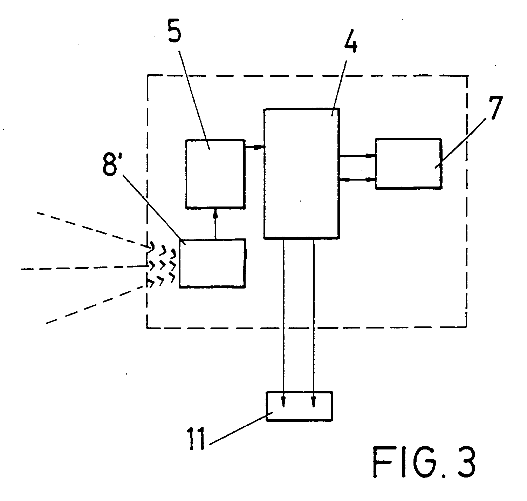

Figure 3 shown the scheme of the decoder of this alarm where the microcontroller, the non-volatile memory, the demodulator, the antenna and the decoder interface are represented along with the vehicle alarm itself.

### PREFERRED EXECUTION OF THE INVENTION

Each telecommand is clearly identified by a digital code through a set of "m" bits which identifies before the system decoder.

This digital code - hereinafter called "ID" - is stored on the firmware of the control or telecommand unit and programmed at the time of its manufacturing. It cannot be subsequently altered through electronic means, nor can be it accessed through these means without physically damaging the telecommand hardware.

This code is digitally transmitted whenever there is a transmission between the telecommand and the decoder thus enabling the unambiguous identification of each telecommand.

Each telecommand is formed, at least, by a microcontrolled-based control unit (1) and a modulating (2) and signal transmitting unit which relays the information using the selected signal type, either a radiofrequency, infrared or any other signal.

Additionally, the telecommand may incorporate an information reception and demodulation module (3) when the information is bidirectionally transmitted between the telecommand and the decoder.

The transmitted and encoded information and the digital raster used to relay such information change dynamically from one transmission to another.

Each time a transmission is relayed through the telecommand, a sequence of binary rasters is sent with a complement of "I" bits, where "I" > "m" (where "m" is the complement of the ID identifier.

Apart from this "I" bits sequence of the ID identifier, an additional block of control bits is incorporated forming an integral part of the method of dynamic encryption of the relayed information and another additional block to detect eventual errors in the transmission.

These binary rasters which include encoded information vary from one transmission to another thus making virtually impossible or useless its real time decoding due to the fact that the information is encoded using a high number of bits (I = <64) and that the composition of the raster randomly changes in time which makes the sampling and recording of the previously transmitted signal useless for its subsequent analysis or any attempt to infringe the security system.

The decoder is formed by a signal receptor/demodulator (5), a control unit formed by a microcontroller (4), a non volatile memory (7) for the electronic storage of system information and, when bidirectional, a signal modulation/transmission module (6) is also included.

In the plant or during the installation of the decoder, a set of "k" telecommand identifiers is ascribed which, in turn, form part of the set of authorized telecommands of this remote actuation system.

The binary codes of the IDs of these "k" telecommands are stored in the non volatile memory of the decoder and, therefore, they can only be altered by the manufacturer.

This set of identifiers defines the maximum number of telecommands which can be used by this system and of which the end user is perfectly aware. In principle, the identifiers cannot work with a lower number of telecommands.

The telecommands authorized for each decoder, with identifiers stored in their memory, can only be altered by a single entity, in this case the manufacturing entity itself.

The system can operate with a number of authorized telecommands lower than "k" and, accordingly, a training or programming process will be necessary to inform the decoder which telecommands remain enabled from that moment onwards.

During the training or programming process, the decoder can accept "n" telecommands previously authorized where "n" =< "k" or even a maximum set of "j" telecommands the identifiers of which do not belong to the set stored in the decoder memory but which can be recognized by this latter in special circumstances. These telecommands are considered emergency or ancillary telecommands and, therefore, they are seldom used by the user.

The main difference between these telecommands lies on the fact that the "k" identifiers can be automatically recognized as valid by the system upon its installation in the plant and depend from a specific system while the "j" ancillary telecommands can only be attributed to a specific system after a training process.

This means that, during the training or programming process, a maximum number of "k + j" telecommands can be activated and, they will be recognized by the system decoder after this moment.

It should be emphasized that the training or programming process of the decoder is reiterative and be performed at any given time through a specific process to which the use of the system cannot access.

This way, any subset of "n + j" telecommands can be activated, of which "n" are previously authorized by the system and form part of its set of "k" identifiers ("n =< k") and a maximum of "j" ancillary telecommands which, obviously, can be any identifier different from those authorized by the manufacturer.

The information sent in the binary raster between the telecommand and the decoder represents, for the ID identifier of the telecommand, a description of the status of a specific area or the status of the telecommand itself after the transmission. This information is stored in the non volatile memory by the decoder after each correctly completed transmission.

As an additional security measure, this information is analyzed through a transmission every time that the relevant telecommand requires the attention of the decoder. For this purpose, a predetermined consistency between the stored information of the last transmission and the information transmitted is required. This is an additional constraint which prevents the real time decoding and/or duplication of the information sent between the telecommands and the decoder by any element which is not aware of the algorithms involved in the process.

Briefly, this high security remote actuating intelligent system incorporates:
- a dynamic encoding of the digitally transmitted information between the different telecommands of the system and the decoding unit, through algorithms that guarantee the non-recurrence but, mainly, the randomisation of the binary sequences sent in each transmission.
- the unambiguous identification of the telecommands through digital identifiers with a word length of "m" bits which guarantees the possible existence of 2^{m} different telecommands. In the proposed case, "m" = 24 which enables the existence of more that 16 million telecommands with different identifiers.
- a previous imputation process in the plant of a set of "k" identifiers for each system which remain stored in the non volatile memory of the decoder. These "k" identifiers enable to define a set of "k" different telecommands previously authorized to operate with the system under normal conditions.
- a simple training or programming process where a subset of "n" telecommands previously authorized, where "n =< k" is ascribed to each system. Along with these telecommands, the identifiers of which are previously stored in the firmware of the decoder, a maximum number of "j" telecommands, the identifier of which does not form part of the above-mentioned group and which are consider ancillary or additional telecommands, can be ascribed.
- the group of telecommands so ascribed to the system will be incorporated to the group of active telecommands of such system.
- the detection and external indication of the presence of active telecommands the identifier of which does not belong to the set of telecommands authorized by the manufacturer of the system. This procedure prevents the non-authorized introduction of extra telecommands during any training or programming process.

The high security remote actuating intelligent system herein described would be used for a specific application of an alarm system for motor vehicles.

The system implemented and which serves as an example and which supports this patent uses a one-way communication between the telecommands and the decoder by means of a radio-frequency signal as a supporting media for this communications. The transmission/reception frequencies may vary depending of the legislations in force in this field in the different countries where the use of this system is foreseen.

Each telecommand has a Microchip 16C56 microcontroller (1) which controls it and defines the encoding of the information and composition of the binary raster to be transmitted. To transmit such information, there is a modulation and broadcast block (2) which performs the modulation of the signal to be transmitted with the digital information received from the microcontroller forming the binary sequence rasters to be transmitted through the antenna of the system (8). The interface with the user is achieved by means an external signalling LED (9) and the command key (10).

The binary raster has a total of 64 bits (I = 64). A series of rasters are transmitted sequentially in time whenever the telecommand is activated by the user by pressing the key.

Each telecommand has a digital ID identifier - which is recorded in the firmware in the plant - with a set of 24 bits ("m" = 24) which enables the existence in this case of ca. 16 x 10⁶ different identifiers or telecommands. The direct access to these pre-recorded identifiers is not possible through the conventional means.

The telecommands can be accessed in two ways which are considered as normal:
- The simple enabling / disabling of the system by pressing the telecommand key.
- The enabling of the system as an ancillary function by continuously pressing the key at least for three seconds.

The decoder, in turn, is formed by a Microchip 16C57 microcontroller (4) which is the control and process unit of the decoder, by an EEPROM non volatile memory (7) sequentially connected with the microcontroller through the telecommunication lines and which also incorporates a reception / demodulation module (5) which demodulates the RF signal received through the antenna (8') for the base band and makes this signal with the digital information available to the microcontroller (4) to be analyzed and processed.

Furthermore, the decoder also has a set of input / output lines (11) which enable its external communications interfacing with the control unit of the global alarm system.

During the manufacturing process, four identifiers ("k" = 4) are recorded in the EEPROM memory of the decoder preventing the possibility of an external access to this information through conventional electronic means without causing any irreparable damages to the decoding unit.

Furthermore, the decoder enables the use of an ancillary telecommand ("j" = 1) the identifier of which does not belong to the above-mentioned set.

This way, the system enables the use of 4 + 1 different telecommands which will be activated within the system by means of a training or programming process. This training / programming mode is activated in the decoder through a specific configuration of the input lines of the microcontroller.

The decoder has three operating modes which can be configured by using the existing input lines.

The normal decoding mode of the system actuates through the decoding of the information received from the telecommands, and indicates the following situations, externally:
- Correct enabling / disabling
- Enabling as an ancillary function (correct transmission for more than three seconds)
- Reception of the incorrect identifier (ID), i.e. reception of the telecommand the identifier of which is not recognized by the system.
- Reception of the incorrect raster
- Fifth telecommand enabled (ancillary telecommand enabled in the system).

Thus, the normal decoding is the way to guarantee a redundant security: the decoder records the status of each telecommand at the completion of the transmission in the EEPROM memory.

Such status is shown on a specific field of the digital raster sent by each telecommand and is updated whenever a new transmission is made.

Every time that a new transmission is received by a telecommand of the system, the consistency of the information received is verified by comparing it with the last status recorded in the memory and which corresponds to the relevant telecommand.

When the consistency of the status is not the one expected, this is externally indicated through an output line of the decoder (Reception of the incorrect raster) and the required enabling/disabling is not carried out.

Meanwhile, a special and simple synchronization procedure of the relevant telecommand is allowed, since such inconsistency can result in a loss of information in the telecommand due to unexpected reasons, for instance the exhaustion or loss of the supply batteries.

The verification mode allows to test the transmission / reception conditions between the telecommands and the decoder when the information of the rasters received is not analyzed but only the eventual presence of a format error.

In the training or programming mode, the decoder will learn or activate the identity of the telecommands which will be recognized by such decoder through this procedure.

The system automatically accepts or recognizes a subset of telecommands the identifiers of which are authorized by the set of identifiers programmed by the manufacturer in the EEPROM of the unit along with another additional telecommand the identifier of which does not belong to such set and which will be considered as an ancillary one (5th telecommand) within a total 4 + 1 possible telecommands or identifiers.

If an ancillary telecommand (5th telecommand) is learnt or activated during the training or programming process, its presence will be externally indicated (5th Active Telecommand) when any of the telecommands of the system is operated in the normal decoding mode.

The system, by default, incorporates a subset of two authorized telecommands ("n" = 2) duly activated by a previous training or programming process. There are two reserve identifiers to be ascribed to two future new and eventual telecommands to be installed in plant.

Finally, although the preferred implementation is the volatile memory, the current technology enables to ascribe these functions to a part of the microprocessor itself. This encapsulation within the main memory serves as an additional protection against any manipulation by third parties.

We do not wish to expand this description on the basis that any expert on the subject has enough information to understand the scope of the invention, its relevant advantages and to be able to reproduce it.

It is understood that, provided the essentials of the invention are not altered, any changes in the materials either the shape, size and arrangement of the elements can be introduced in this invention.

The terms used for the description, and their meaning should always be considered as non limitative.

## Claims

1. A high security remote actuating intelligent system formed, on the one hand, by one or more control or telecommand units consisting of a Microchip microcontroller (1), a signal modulation and broadcast unit (2) which can be relayed by any means, and a receiving and demodulating module (3) for bidirectional transmissions and, on the other hand, by a decoding unit formed by a Microchip microcontroller (4), a signal receiver / demodulator (5), a non volatile memory (7) for the telecommand identifiers and their reiterative control, plus a signal modulation / reception module (6), for bidirectional transmissions and, along with both units, their signal transmitters (8) and (8') with 2^{m} (m =< 64 bits) digital identifiers for each telecommand and unambiguously identified by this digital code in the decoder. It is essentially characterized because the electronic access to the identifiers of the telecommands is not possible from outside without seriously damaging or destroying the non volatile EEPROM memory (7) and because during the manufacturing process only a maximum "k" number of fixed identifiers equal to the number of telecommand units of the system is authorized to operate within any individual system under normal conditions. Such identifiers are sent by the decoding unit to the external signalling system (9) which duly indicates the enabling / disabling of the system. If the identifier is different from those authorized for the operation under normal conditions, the system is not enabled/disabled and the signalling system (9) indicates its presence.

2. A high security remote actuating intelligent system, according to the previous claim, characterized because each individual and specific system formed by some specific telecommands and a specific decoder to which a given number of "n" identifiers equal or lower than "k" is ascribed, can be subject to a previous training or programming reiterative process at any given moment and which cannot be accessed by the user of the system but which is activated by the decoding unit through the input lines of the microcontroller which enables this unit to know the still active telecommands when "n" is lower than "k".

3. A high security remote actuating intelligent system, according to the previous claims, characterized because the decoding unit can accept an additional "j" number of ancillary telecommands during such training or programming process, the identifiers of which were not authorized in the memory (7) which recognizes them as valid after the training or programming process.

4. A high security remote actuating intelligent system, according to the previous claims, characterized because the decoding unit detects the presence of any of the "j" ancillary active telecommands already recognized as valid and indicates them externally and specifically through the external multiple signalling system (9) which indicates the correct enabling / disabling of the system while if the identifier is different from those now authorized as ancillary, the system is not enabled / disabled and the signalling system (9) indicates its presence.

5. A high security remote actuating intelligent system, according to the previous claims, characterized because the system formed by the telecommand units and the decoding unit also incorporates a dynamic non reiterative and randomized encoding of the information the raster of which is digitally transmitted from the control units to the decoding unit.

6. A high security remote actuating intelligent system, according to the previous claims, characterized because the system formed by the telecommand units and the decoding unit has a redundant security system consisting of the additional comparison of the raster which is being received by the decoder from the telecommand with that available in the non volatile memory (7) from the last transmission. If this comparison is consistent, the system replaces the raster by the last one received and actuates the requested enabling / disabling. On the contrary, it indicates the incorrect reception in (9) through the output line (11) of the decoding unit.

7. A high security remote actuating intelligent system, according to the previous claim, characterized because when the incorrect reception has been indicated, the system admits the synchronization of the telecommand for verification. During such verification, the decoding unit does not decode the information received in the raster but only verifies the presence of an erroneous format.

8. A high security remote actuating intelligent system, according to the above claims, characterized because the decoder interfaces with an alarm unit, external to the claimed system, through the input / output lines (11) which enable external communications.

9. A high security remote actuating intelligent system, according to the above claims, characterized because the transmission of the information can be achieved either through a radiofrequency, electric, optic or any other signal.

10. A high security remote actuating intelligent system, according to the above claims, where this system is the actuator incorporated to an alarm for motor vehicles, characterized because the microcontrollers (1) of the telecommand units and the microcontroller (4) of the decoding unit are Microchip; because the interface with the use is achieved through the telecommand key (10); because a one-way transmission system is defined, i.e. optionally the receiving and modulating module (3) of the control unit and the relevant module (6) of the decoder have been eliminated and, additionally, because the binary raster available for transmission by the telecommand is of 64 bits and the digital code has "m" = 24 bits, i.e. there are 2²⁴ different identifiers for each telecommand.

11. A high security remote actuating intelligent system, according to the previous claims, characterized because there are "n" = 4 fixed identifiers, two of them for two telecommands authorized during the manufacturing process to operate under normal conditions and another two in reserve for an eventual extended use, and another "j" = 1 as a unique ancillary identifier.
